# EUROPEAN PATENT APPLICATION

(11) **EP 4 741 216 A1**
(43) Date of publication of application: **13.05.2026**
(21) Application number: 24846097.4
(22) Date of filing: 29.07.2024
(51) Int. Cl.: B60L 53/30, B60L 55/00, H04W 4/80, H04W 84/12

(54) **COMMUNICATION METHOD AND APPARATUS FOR BIDIRECTIONAL POWER TRANSFER IN ELECTRIC VEHICLE USING GRID CODE PARAMETER**

(30) Priority: 27.07.2023 KR 20230098388
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: SEONG, Jae Yong, Hwaseong-si, Gyeonggi-do 18280 (KR); JUNG, Taek Hyun, Hwaseong-si, Gyeonggi-do 18280 (KR); KIM, Seong Rae, Hwaseong-si, Gyeonggi-do 18280 (KR); LEE, Dong Jun, Hwaseong-si, Gyeonggi-do 18280 (KR); KIM, Jae Hyun, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2024/011002
(87) International publication number: WO 2025/023796

(57) **Abstract**

A charging communication method for electric mobility charging, according to the present invention, comprises the steps of: an EVCC requesting a grid code related to a BPT function from an EVSE; the EVCC receiving the grid code of a power network from the EVSE; and the EVCC performing, on the basis of the grid code of the EVSE, a subsequent preparation procedure related to the BPT function.

## Description

### [Technical Field]

The present disclosure relates to a bidirectional power transfer (BPT) method and apparatus between an electric vehicle (EV) or an electric mobility and a grid, and, more particularly, to a communication method and apparatus for a bidirectional power transfer between an electric vehicle or an electric mobility and the grid.

### [Background Art]

The matters described in this section are provided merely as background information for understanding exemplary embodiments and do not constitute prior art.

Recently developed electric vehicles (EVs) drive motors using battery power, and have advantages such as fewer air pollutants such as exhaust gas and noise compared to conventional gasoline engine vehicles, fewer failures, long service life, and simple driving operation.

Electric vehicles may be classified into a hybrid electric vehicle (HEV), a plug-in hybrid electric vehicle (PHEV), and an electric vehicle (EV) depending on driving sources. An HEV includes an engine as a main power source and a motor as an auxiliary power source. A PHEV includes a motor as a main power source and an engine used when the battery is discharged. An EV includes a motor but does not include an engine.

An electric vehicle charging system may basically be defined as a system for charging a battery mounted in an electric vehicle by using power of a power distribution grid or an energy storage device. The electric vehicle charging system may have various forms depending on the type of electric vehicle. For example, the electric vehicle charging system may include a conductive charging system using a cable or a contactless wireless power transfer system.

During charging of an electric vehicle, a vehicle assembly (VA) mounted in the electric vehicle may form inductive resonant coupling with a transmission pad of a ground assembly (GA) located at a charge station or charging spots. The electric vehicle may charge its battery by using power delivered from the ground assembly through the inductive resonant coupling.

A robot arm or a manipulator may be used to supply power from an electric vehicle supply equipment (EVSE) to a charging door or port of an electric vehicle.

In this case, considering various types of electric vehicle charging doors, various types of electric vehicle supply equipment, and various charging methods, it is necessary to define procedures for positioning between an electric vehicle and a manipulator and procedures for a preparation stage for supplying power.

A message sequence between a grid and an electric vehicle (EV) may be performed by exchanging predefined request and response message pairs between a supply equipment communication controller (SECC) located on the grid side and an electric vehicle communication controller (EVCC) mounted in the electric vehicle.

An electric vehicle typically charges a vehicle battery through a charging method using an automatic connection device, a wireless power transfer method, an AC charging method, or a DC charging method. To charge the battery, the electric vehicle exchanges messages with the SECC relating to a session setup, a vehicle positioning setup, vehicle positioning, pairing, authentication and authorization setup, authentication and authorization, service discovery, service detail, and service selection.

For example, after the electric vehicle receives a vehicle-positioning-setup response message, when the electric vehicle cannot find a compatible method for positioning or pairing for the automatic connection device or the wireless power transfer, the electric vehicle may move to a service discovery state through service renegotiation in a session-stop state.

However, in related standards (e.g., ISO 15118) or in the prior art, an automatic connection device pantograph (ACDP) protocol for message sequencing between an electric vehicle and a grid is insufficient, and it is necessary to modify message parameters, and accordingly, a change in message sequence is required. In addition, in related standards or in the prior art, separate definitions of additional VSE (Vendor Specific Element) information parameters for an automatic connection device underbody (ACDU) or an automatic connection device sidearm (ACDS) are required.

### [Disclosure]

### [Technical Problem]

The objective of the present disclosure is to provide an improved ISO 15118-based charging communication method and apparatus for an electric mobility and an electric vehicle supply equipment (EVSE) that provide a bidirectional power transfer (BPT) function.

Although various communication technologies may be used, each communication technology has strengths and weaknesses, and according to the present disclosure, selective application of communication technologies that may perform roles more effectively in various procedures of an electric mobility charging process is proposed.

In this process, by considering various types of electric mobility charging doors, various types of electric vehicle supply equipment, and various charging methods when supplying power from a power supply device or power supply equipment (EVSE) to an electric mobility, message types, data formats may be proposed so that positioning between the electric mobility and a charging manipulator and a preparation stage for supplying power may be performed.

Another objective of the present disclosure is to propose a sequence in which an electric mobility receives a grid code from an electric vehicle supply equipment (EVSE) and prepares requirements for performing a bidirectional power transfer (BPT), since in the case of AC BPT, the grid codes differ for each country or region, and regulations related to upper and lower limits of standards of power transfer, transient responses, and safety specifications indicated by the grid codes differ. Accordingly, the electric mobility may comply with transient responses and safety specifications related to power transfer in a case in which the electric mobility is coupled to a grid via an EVSE, and may implement required hardware settings.

Another objective of the present disclosure is to propose a sequence, messages, and parameter information in which the electric mobility requests a grid code and receives a response.

### [Technical Solution]

According to an aspect of an exemplary embodiment of the present disclosure, a charging communication method performed between a supply equipment communication controller (SECC) and an electric vehicle communication controller (EVCC) may be a charging communication method performed between an SECC associated with a primary assembly that transfers power to an electric vehicle, and an EVCC associated with a secondary assembly mounted in the electric vehicle and receiving power from the primary assembly.

According to an exemplary embodiment of the present disclosure, a charging communication method for charging an electric mobility is performed by an electric vehicle communication controller (EVCC) of an electric mobility, and may include requesting, by the EVCC, a grid code related to a bidirectional power transfer (BPT) function to an electric vehicle supply equipment (EVSE) that transfers power to the electric mobility; receiving, by the EVCC, a message including a grid code of a power network to which the EVSE belongs, from the EVSE; and performing, by the EVCC, a procedure related to the bidirectional power transfer function based on the grid code of the EVSE.

In the charging communication method performed by the EVCC according to an exemplary embodiment of the present disclosure, the grid code may include information of a country, a region, or an authority of the power network to which the EVSE belongs.

In the charging communication method performed by the EVCC according to an exemplary embodiment of the present disclosure, the message including the grid code may include information related to a low voltage ride through (LVRT) or high voltage ride through (HVRT) for responding to a process in which a power supply device is coupled to or separated from the power network, defined in the power network, or information related to a reactive power response time.

In the charging communication method performed by the EVCC according to an exemplary embodiment of the present disclosure, the message including the grid code may include information of a power, a voltage, or a safety specification of a process in which power is transferred between the electric mobility and the EVSE.

In the charging communication method performed by the EVCC according to an exemplary embodiment of the present disclosure, the requesting of the grid code and the receiving of the message including the grid code may be performed as part of, or together with, a process in which the electric mobility and the EVSE exchange function information supported by each other and check compatibility between the electric mobility and the EVSE.

The requesting of the grid code and the receiving of the message including the grid code may be performed as part of, or together with, a process in which the EVCC discovers the EVSE and connects to a communication network to which the EVSE belongs or connects to the EVSE.

The requesting of the grid code and the receiving of the message including the grid code may be performed as part of, or together with, a process in which an initial setup is performed between the EVCC and the EVSE.

The requesting of the grid code and the receiving of the message including the grid code may be performed as part of, or together with, a process in which authorization or services negotiation is performed between the EVCC and the EVSE.

The requesting of the grid code and the receiving of the message including the grid code may be performed as part of, or together with, a process in which parameters are exchanged between the EVCC and the EVSE.

In the charging communication method performed by the EVCC according to an exemplary embodiment of the present disclosure, The charging communication method of claim 1, wherein the message including the grid code may include information related to power supply capabilities supported by the EVSE.

According to an exemplary embodiment of the present disclosure, an electric vehicle communication controller (EVCC) arranged in an electric mobility and associated with a secondary assembly that receives power from a primary assembly, may include a processor configured to receive and execute at least one instruction from a memory.

The processor of the EVCC may be configured to request a grid code related to a bidirectional power transfer (BPT) function to an electric vehicle supply equipment (EVSE) corresponding to the primary assembly; receive, by the EVCC, a message including a grid code of a power network to which the EVSE belongs, from the EVSE; and perform, by the EVCC, a procedure related to the bidirectional power transfer function based on the grid code of the EVSE.

In the EVCC according to an exemplary embodiment of the present disclosure, the grid code may include information of a country, a region, or an authority of the power network to which the EVSE belongs.

In the EVCC according to an exemplary embodiment of the present disclosure, the message including the grid code may include information related to a low voltage ride through (LVRT) or high voltage ride through (HVRT) for responding to a process in which a power supply device is coupled to or separated from the power network, defined in the power network, or information related to a reactive power response time.

In the EVCC according to an exemplary embodiment of the present disclosure, the message including the grid code may include information of a power, a voltage, or a safety specification of a process in which power is transferred between the electric mobility and the EVSE.

In the EVCC according to an exemplary embodiment of the present disclosure, the processor may be configured to request the grid code to the EVSE and receive the message including the grid code from the EVSE as part of, or together with, a process in which the electric mobility and the EVSE exchange function information supported by each other and check compatibility between the electric mobility and the EVSE.

According to an exemplary embodiment of the present disclosure, a charging communication method for charging an electric mobility is performed by a supply equipment communication controller (SECC) associated with a primary assembly that transfers power to an electric mobility, and may include receiving a message requesting a grid code related to a bidirectional power transfer (BPT) function from the electric mobility; transmitting a message including a grid code of a power network to which an electric vehicle supply equipment (EVSE) corresponding to the primary assembly belongs, to the electric mobility; and performing, by the EVSE, a procedure related to the bidirectional power transfer function based on the grid code.

In the charging communication method performed by the SECC according to an exemplary embodiment of the present disclosure, the grid code may include information of a country, a region, or an authority of the power network to which the EVSE belongs.

In the charging communication method performed by the SECC according to an exemplary embodiment of the present disclosure, the message including the grid code may include information related to a low voltage ride through (LVRT) or high voltage ride through (HVRT) for responding to a process in which a power supply device is coupled to or separated from the power network, defined in the power network, or information related to a reactive power response time.

In the charging communication method performed by the SECC according to an exemplary embodiment of the present disclosure, the message including the grid code may include information of a power, a voltage, or a safety specification of a process in which power is transferred between the electric mobility and the EVSE.

In the charging communication method performed by the SECC according to an exemplary embodiment of the present disclosure, the receiving of the message requesting the grid code from the electric mobility and transmitting of the message including the grid code to the electric mobility may be performed as part of, or together with, a process in which the electric mobility and the EVSE exchange function information supported by each other and check compatibility between the electric mobility and the EVSE.

### [Advantageous Effects]

According to an exemplary embodiment of the present disclosure, the performance of electric vehicle charging communication can be improved, and user convenience can be enhanced.

According to an exemplary embodiment of the present disclosure, in a charging communication method for charging an electric vehicle, communication between the electric vehicle or the EVCC and a power supply facility (EVSE) or the SECC, and a plurality of procedures of a charging process between a primary assembly and a secondary assembly, can be performed more effectively by using two or more different communication techniques.

According to an exemplary embodiment of the present disclosure, effective message types and data formats can be provided so that procedures for positioning between the electric vehicle and a charging manipulator, and a preparation step for supplying power, can be performed in consideration of various types of electric vehicle charging ports, various types of electric vehicle supply equipment, and various charging methods when power is supplied from a power supply device or an electric vehicle supply equipment (EVSE) to the electric vehicle.

Since, in the case of AC BPT, grid codes differ depending on countries or regions, and regulations regarding upper and lower limits of power-transfer specifications, transient responses, and safety specifications indicated by grid codes differ, according to an exemplary embodiment of the present disclosure, a sequence can be provided in which an electric mobility receives a grid code from an EVSE and prepares requirements for performing BPT by using the grid code.

According to an exemplary embodiment of the present disclosure, the electric mobility can comply with transient responses when the electric mobility is coupled to the grid via the EVSE, and safety specifications related to power transfer, and can implement hardware settings required therefor.

According to an exemplary embodiment of the present disclosure, a sequence, a message, and parameter information in which the electric mobility requests a grid code and receives a response can be provided.

### [Description of Drawings]

FIG. 1 is a conceptual diagram illustrating an architecture in which charging communication for charging an electric vehicle is performed according to an exemplary embodiment of the present disclosure.
FIG. 2 is a conceptual diagram illustrating a protocol of a charging communication technique employable in the architecture of FIG. 1 according to an exemplary embodiment of the present disclosure.
FIG. 3 is a conceptual diagram illustrating VSEs of an SECC and an EVCC employable in a discovery and connection session according to an exemplary embodiment of the present disclosure.
FIG. 4 is a conceptual diagram illustrating an ETT (Energy Transfer Type) configuration employable in a discovery and connection session according to an exemplary embodiment of the present disclosure.
FIG. 5 is a conceptual diagram illustrating a proposal for changes to an ISO 15118-8-based ACD ETT employable in an ACD charging communication method according to an exemplary embodiment of the present disclosure.
FIGS. 6 and 7 are conceptual diagrams illustrating a proposal for changes to a service discovery protocol (SDP) employable in an ACD charging communication method according to an exemplary embodiment of the present disclosure.
FIG. 8 is a conceptual diagram illustrating a proposal for a new service ID employable in a service discovery session according to an exemplary embodiment of the present disclosure.
FIG. 9 is a conceptual diagram illustrating a proposal for configuration parameters of a DC-ACDS service employable in a service detail format according to an exemplary embodiment of the present disclosure.
FIG. 10 is a conceptual diagram illustrating, in detail, a charging communication process using a grid code according to an exemplary embodiment of the present disclosure.
FIG. 11 is a conceptual block diagram illustrating an internal structure of a computing system capable of implementing a wireless LAN access point (AP) arranged for generalized ACD, communication/communication-control devices included in ACD, an SECC, an EVCC, and an EVSE, and a short-range communication device arranged in an electric vehicle/electric mobility or an ACD, as a charging communication device according to an exemplary embodiment of the present disclosure.

### [Best mode of the Invention]

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Original Equipment Manufacturer (OEM)": A server operated by a producer who manufactures the EV and may refer to a Root Certification Authority (RootCA) issuing an OEM RootCA Certificate.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charging station (CS)" may refer to a facility that includes one or more EV power supply devices and may actually perform charging for an electric vehicle.

The charging station may include at least one GA and at least one GA controller configured to manage the at least one GA. The GA may include at least one wireless communication device. The charging station may refer to a place or location including at least one GA, which is provided in home, office, public place, road, parking area, etc.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

In addition, "mobility operator (MO)" may refer to a service provider that enters into a contractual relationship with an EV owner regarding charging, authorization, and payment so that an EV driver may charge the electric vehicle at a charging station.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (eMAID)" may refer to a unique identifier of an electric mobility that associates a contract certificate with a payment account of an EV owner.

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to enable a user-friendly mechanism for performing an authentication, authorization, and payment at the charging station without requiring a separate user interaction.

An electric vehicle may be integrated into the smart grid to provide a flexible load control and valuable grid services without compromising driver habits. To avoid the need for additional grid components to supply power during a peak demand caused by a variety of load fluctuations, the energy stored in the electric vehicle may be considered as one of energy sources in the smart grid. Furthermore, in order to encourage the long-term expansion of renewable energy sources, providing appropriate incentives to the electric vehicles may also be considered as a means to activate the smart grid.

The vehicle-to-grid transfer protocol of the OSI layer 5 ("V2GTP") may be understood as a session wrapper of application-layer messages exchanged between a vehicle and a grid. The application-layer messages at this time may be referred to as V2G messages. The V2GTP protocol may include a header and a payload definition that enable efficient differentiation and processing of V2G messages.

Autoconnect charging device or automatic charging device ("ACD") technology may be implemented based on the contents specified in ISO/IEC 15118 Edition 2 and ISO 15118-20, in which at least a portion of a charging process is performed by controlling a robot or an automated device by using wireless communication.

As exemplary embodiments of the ACD technology, types such as ACD-U (Underbody), ACD-S (Sidearm), or ACD-P (Pantograph) may be proposed based on an approaching direction of an ACD facility of an EVSE toward an electric mobility and/or based on a position of the EVSE-side ACD facility relative to the electric mobility. Additional ACD types may be included in the future with the expansion of wired or wireless charging technologies.

The ACD charging communication method described below may define a new namespace for ISO 15118-based ACD charging communication over WLAN, may change message parameters, may change message sequences, and may be configured to use a docking-undocking-pairing mechanism. The ACD charging communication method may also be configured to define VSE additional-information parameters for ACD-U or ACD-S.

Vendor specific element ("VSE") may refer to a data format that includes information about a type of an EVSE available at a current location in ISO 15118-based communication.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

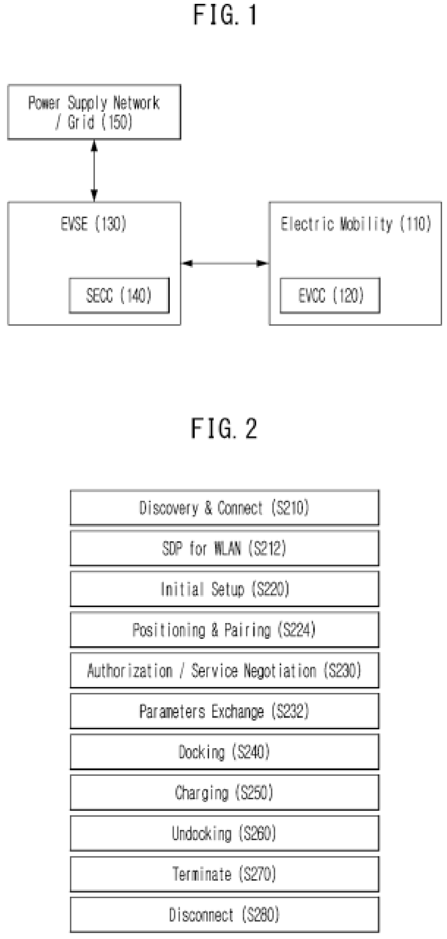

Hereinafter, detailed matters of the present disclosure are described through exemplary embodiments of FIG. 1 to FIG. 16.

FIG. 1 is a conceptual diagram illustrating an architecture in which charging communication for charging an electric mobility 110 is performed according to an exemplary embodiment of the present disclosure.

As shown in FIG. 1, the present disclosure may be applied to various types of electric mobility 110 capable of traveling using electric energy. The electric mobility 110 may refer not only to mobility that travels only by electric energy but also to various types of hybrid electric mobility capable of using other energy sources together.

Even when the present disclosure targets various electric mobilities, an expression such as an EVSE 130 may customarily refer to a device supplying electric energy, and an expression such as an EVCC 120 may refer to a controller performing electronic communication and control in the electric mobility 110.

Electric power is supplied to the EVSE 130 from a power supply network 150, and electric power may be transferred from the EVSE 130 to the electric vehicle/electric mobility 110.

Electric power may be supplied from a primary assembly of the EVSE 130 to a secondary assembly of the electric vehicle/electric mobility 110. In order for electric power to be supplied from the primary assembly to the secondary assembly, a docking process between the primary assembly and the secondary assembly may be required, and after electric power has been supplied, an undocking process may be performed so that the primary assembly and the secondary assembly are separated.

In supplying electric power between the EVSE 130 and the electric mobility 110, a wired or wireless power transfer (WPT) technology may be used. In wired power transfer, a technology according to a standard such as an automatic charging device (ACD) may be used.

In addition, not only may electric power be supplied from the power grid 150 to the electric mobility 110 via the EVSE 130, but electric power may also be supplied from the electric mobility 110 to the power grid 150 via the EVSE 130. Whether the electric mobility 110 and/or the EVSE 130 supports such a bidirectional power transfer (BPT) function may be discussed in advance in a negotiation process before the EVSE 130 is determined or power supply begins.

As shown in FIG. 1, in charging communication between an SECC 140 on the EVSE 130 side, which is connected to the electric vehicle supply equipment 130, and an EVCC 120 on the electric vehicle/electric mobility 110 side, which is mounted in the electric vehicle/electric mobility 110, a level-2 communication such as WLAN and a level-1 communication technology such as UWB may be used. For example, while the electric vehicle/electric mobility 110 enters a charging station, an EVSE 130 is determined, and the electric vehicle/electric mobility 110 is positioned to approach the EVSE 130, a level-2 communication technology such as WLAN may be used, and in a communication process directly connected to a charging process in which electric power is supplied after positioning, a level-1 communication technology may be used. A level-2 communication technology may have a wider range and provide more functions than a level-1 communication technology, whereas a level-1 communication technology may be suitable for short-range communication and may be implemented at low cost. Examples of level-1 communication technologies may include not only wireless communication technologies but also wired communication technologies such as PLC, or various short-range wireless communication technologies such as BLE, irDA, or RFID.

In an alternative exemplary embodiment of the present disclosure, when the primary assembly and the secondary assembly are ACDS, a level-1 approach may be proposed.

In control communication between ACDs or between an EVSE and an electric mobility for operations based on position information, such as positioning and pairing of an electric vehicle or electric mobility, UWB, BLE, or a short-range communication technology may be used. In a charging process, a communication technology defined in ISO 15118-2 and/or ISO 15118-20 may be used. Such communication technology may include a PLC technology.

Advantages of the level-1 approach may include that an existing charging communication protocol may be reused, for example, after docking.

Disadvantages of the level-1 approach may include that a complicated design for harmonizing different protocols for the same session may be required, and additional pairing between two channels may be required. For example, on an EV side, confirmation may be required that an SECC connected through a UWB channel and an SECC connected through a PLC channel correspond to the same SECC. Different methods may also need to be implemented for similar charging modes. When an ACDU uses a UWB+PLC technology and an ACDS uses a WLAN technology, additional design may be required accordingly. Authentication between an EVCC and an SECC may also need to be additionally performed. For example, separate authentication may be required for PLC connection and UWB connection.

Therefore, in the present disclosure, a level-2 communication technology proposed in ISO 15118-20 may be used. In ACDS or ACDU communication, WLAN may sufficiently perform required roles. UWB may perform an important role in vehicle positioning, pairing, etc.

In an exemplary embodiment of the present disclosure, WLAN and UWB may be used together in a modified ISO 15118-20 and ISO 15118-8. In addition to UWB, a short-range communication technology such as BLE, RFID, or IrDA may be used.

WLAN may be suitable for complicated data communication such as TCP/IP/TLS/XML. UWB may be more advantageous than WLAN for pairing and positioning due to its ranging capability. Therefore, in an exemplary embodiment of the present disclosure, WLAN may be used as a main channel for most sessions except for a discovery operation and preparation operations for pairing and positioning. UWB may be used for vehicle positioning, and if needed, may be used also for pairing. UWB may additionally be used for operations such as docking, undocking, ACD-related error detection, or error handling. A short-range communication technology having characteristics similar to UWB may be used instead of UWB in other exemplary embodiments of the present disclosure, which may be understood by a person skilled in the art. Examples may include BLE, RFID, IrDA, or NFC.

For modifications such as the exemplary embodiments to be described later, ACDS or ACDU parameters related to a vendor specific element (VSE) and/or Additional Info. in ISO 15118-8 may be proposed to be modified. In ISO 15118-20, message parameters, message sequences, additional namespaces, and requirements may be changed or additionally proposed.

According to an exemplary embodiment of the present disclosure, an ACD charging communication method may be provided that defines a new namespace, changes message parameters, changes message sequences, and uses a docking-undocking-pairing mechanism.

According to an exemplary embodiment of the present disclosure, an ACD charging communication method may be provided that defines VSE additional-information parameters for ACDP, ACDU, or ACDS.

According to an exemplary embodiment of the present disclosure, an ACD charging communication method may be provided for an ACD that uses robotics, such as a manipulator or robot arm, as a docking-undocking mechanism.

According to an exemplary embodiment of the present disclosure, an ACD charging communication method may be provided such that communication between an EV or an EVCC and electric power supply equipment (EVSE) or an SECC, and a plurality of procedures for a charging process between a primary assembly and a secondary assembly, may be performed more effectively by using two or more different communication techniques.

Although various communication technologies may be used, strengths and weaknesses exist for each communication technology, and selective application of communication technologies suitable for respective procedures of an EV charging process is proposed in the present disclosure.

According to an exemplary embodiment of the present disclosure, an improved charging communication method and device may be provided, in which an electric vehicle discovers a power-supply device or a power-supply apparatus (EVSE, Electric Vehicle Supply Equipment) through a communication technology specialized for short-range communication, obtains location information and/or information for positioning, and performs a charging-preparation process and a charging process through a communication technology having various functions after the electric vehicle is positioned at a location where charging is possible.

In this process, message types and data formats may be proposed such that procedures for positioning between an electric vehicle and a charging manipulator and procedures for preparation for electric power supply may be performed by considering various types of charging inlets of an electric vehicle, various types of electric vehicle supply equipment, and various charging methods when electric power is supplied from an electric vehicle supply equipment (EVSE) to an electric vehicle.

FIG. 2 is a conceptual diagram illustrating a protocol of a charging communication technique employable in the architecture of FIG. 1 according to an exemplary embodiment of the present disclosure.

As shown in FIG. 2, a process in which an electric mobility enters a charging station, prepares for charging, starts charging, and completes charging is disclosed.

Pairing refers to a process in which a user connects to communication with a desired EVSE or ACD, and according to the exemplary embodiment of FIG. 2, pairing may be related to a process (S224) of discovering and connecting to the SECC module closest to an EVCC module of the mobility by searching for an SECC module (S210).

When the EVSE supports an ACD function, positioning may refer to a process in which a manipulator of an ACD moves to a sufficiently close location and/or position so as to approach an inlet of the mobility and parks the mobility. It may be required that the inlet position of the mobility be parked so as to be located within a mating space of the ACD.

According to an exemplary embodiment of the present disclosure, an overall process of communication for charging an electric mobility may be performed through a high-level communication such as WLAN.

In positioning and pairing (S224), a communication technology specialized for localization is more effective, and inefficiency may occur when the entire communication session is managed through a WLAN communication technology.

In an alternative exemplary embodiment of the present disclosure, the overall process of communication for charging an electric mobility may be performed through a high-level communication such as WLAN, and positioning and pairing (S224) may be assisted through a communication technology specialized for localization such as UWB, as needed.

In another alternative exemplary embodiment of the present disclosure, the overall process of communication for charging an electric mobility may be performed through a high-level communication such as WLAN, and a communication technology specialized for localization such as UWB may replace the WLAN communication technology to perform positioning and pairing (S224), as needed.

In still another alternative exemplary embodiment of the present disclosure, positioning and pairing (S224) may be performed independently of a WLAN technology or prior to a WLAN connection by utilizing a communication technology such as UWB to maximize the advantages of a communication technology specialized for localization. In such alternative exemplary embodiments, positioning and pairing (S224) may be performed prior to discovery and connect (S210), or positioning and pairing (S224) may be performed together with the discovery and connect (S210) process.

When positioning and pairing (S224) are performed prior to discovery and connect (S210), the efficiency of an overall communication session may be improved by utilizing identification information of the electric mobility and the EVSE obtained in the positioning and pairing process (S224) when performing a WLAN connection (S210).

A method proposed in such alternative exemplary embodiments of the present disclosure may be referred to as a pair-and-talk principle. However, such a name does not limit the scope of the present disclosure.

In the exemplary embodiment of FIG. 2, UWB communication is described for convenience of explanation, but in other exemplary embodiments of the present disclosure, UWB may be replaced with or used together with another communication technology specialized for localization described later. A communication technology specialized for localization may be a low-level communication technology and may be required to be a communication technology having characteristics suitable for localization.

In the exemplary embodiment of FIG. 2, WLAN communication is described for convenience of explanation, but in other exemplary embodiments of the present disclosure, WLAN may be replaced with or used together with another communication technology described later. Such level-2 communication technology may be required to be a high-level communication technology.

As shown in FIG. 2, an exemplary embodiment of the present disclosure illustrates a charging communication process between an EVCC 120 of the electric mobility 110 of FIG. 1 and an SECC 140 on the EVSE 130 side.

According to an exemplary embodiment of the present disclosure, discovery and connect (S210) for discovering the EVSE to charge the electric mobility, and an SDP (SECC Discovery Protocol) (S212) for WLAN that may be performed as part of or as a subsequent process of discovery and connect (S210), may be performed.

After a communication connection, initial setup (S220) may be performed between the EVCC 130 and the SECC 140. After the initial setup (S220), a positioning and pairing (S224) process may be performed in which the electric mobility 110 moves near the EVSE 130 and is paired.

After positioning and pairing (S224), an authorization/service negotiation (S230) and a parameters exchange (S232) process may be performed between the EVCC 130 and the SECC 140 so that a preparation process prior to docking (S240) is successfully performed.

In the docking (S240) process, a requirement related to safety may be verified between the EVCC 130 and the SECC 140 through a communication process. Communication for diagnosis of safety in this situation may be performed through high-level communication such as WLAN, low-level communication such as UWB, or wired communication in a state of wired connection.

After docking (S240) is safely and successfully performed, a charging (S250) process may be performed.

In FIG. 2, the charging (S250) process is illustrated; however, when a bidirectional power transfer (BPT, Bidirectional Power Transfer) function is supported, electric power may be supplied from the electric mobility 110 to the grid 150 via the EVSE 130. In such an exemplary embodiment, a discharging process of the electric mobility 110 may be performed.

When charging (S250) or discharging is completed, an undocking (S260) process may be performed. Afterward, a session may be terminated (S270), and a communication connection may be disconnected (S280).

A communication technology specialized for localization, such as UWB, may be used in pairing and mobility positioning or a preparation process therefor (S224).

Pairing information collected through a communication technology specialized for localization may be delivered to a layer for a high-level communication technology such as WLAN.

A communication technology specialized for localization may refer to UWB, RFID, NFC, irDA, etc. A communication technology specialized for localization may be, for example, a low-level communication technology. A communication technology specialized for localization may be a communication technology that is not costly in terms of communication cost and is implementable with simple hardware. A communication technology specialized for localization may be a communication technology for performing a predetermined task in a predetermined environment. The predetermined task may include assistance for localization, pairing, and/or positioning included in an exemplary embodiment of the present disclosure.

A communication technology specialized for localization may be a technology whose communication range is short, making it easy to determine a position and/or a distance in a process of identifying a communication counterpart.

In an alternative exemplary embodiment of the present disclosure, pairing and positioning (S224) using a communication technology specialized for localization may be assisted so that precise positioning is possible through visual information of a camera, CCTV, or another imaging means installed in a charging station. Visual information of an imaging means possessed by the mobility or a user may additionally be used.

A WLAN client of the electric mobility 120 may be connected to an accurate WLAN server so as to ensure accurate pairing.

A remaining charging communication process after pairing (S224) may be performed through a high-level communication technology such as WLAN (S230 to S280).

A high-level communication technology may refer to, for example, a technology capable of level-2 communication, such as WLAN. A high-level communication technology may be a technology capable of implementing higher-level applications compared to a communication technology specialized for localization and may be a technology capable of providing various applications and various functions.

That is, a high-level communication technology may be a technology in which information and functions that may be provided through communication are relatively abundant, excellent security performance for identification, authentication/authorization, control, and billing is provided, and excellent communication performance such as capacity and speed is provided.

In a docking procedure (S240), a cable is connected, and charging may be started afterward (S250).

According to an alternative exemplary embodiment of the present disclosure, a charging process of an electric mobility may be performed through the following process.

A mobility may park at a location of a charger, an EVSE, or an ACD.

A communication technology specialized for localization such as UWB, RFID, NFC, or irDA may be used so that the mobility and the charger, EVSE, or ACD may identify one another.

Identification information may be obtained in a pairing process (which may precede the process of FIG. 2). The identification information may include a wireless-module ID of the charger. The identification information may be delivered to a WLAN layer.

Since wireless communication modules of the mobility and the charger, EVSE, or ACD are connected by using identification information already shared, the mobility and the counterpart may be accurately connected without confusion. A WLAN-based pairing process may additionally be performed; however, it may be performed automatically and very easily based on the identification information (pairing information) previously shared.

Communication necessary for a subsequent charging process may be performed through WLAN. A high-bandwidth, reliable communication technology provided by WLAN may be provided to a charging communication process together with escalated security features.

A high-level communication technology such as a WLAN technology may trigger another communication technology. For example, a communication technology with a robotics-based ACD may be triggered by a high-level communication technology. In addition, as a termination stage of WLAN-based communication is performed, a UWB-based communication may also be disconnected.

Operation S210 may begin as the mobility enters a charging spot.

The mobility may provide location coordinates of the inlet through a message in the operation S210.

Although an exemplary embodiment illustrates that in the operation S210, a mobility first transmits a request message, in an alternative exemplary embodiment of the present disclosure, an EVSE or an ACD or a charger may periodically or nonperiodically broadcast its mating space and/or localization parameters, and a mobility may receive them and may select one of them such that the operation S210 is performed.

In the operation S220, localization and positioning may be performed together or alternately in sequence. A mobility may continuously measure its own location and a relative distance to an ACD. A location and a relative distance that change while the mobility moves by positioning may be updated. A mobility may move such that an inlet is located within a mating space.

As shown in FIG. 2, an exemplary embodiment of the present disclosure illustrates an embodiment that premises charging based on ACD, but alternative embodiments of the present disclosure may be applicable to other use cases.

An alternative exemplary embodiment of the present disclosure may be applied to conductive charging (including AC and/or DC) using WLAN. A case in which physical connection of a charging cable is performed without communication, for example, by a person, may be considered.

Existing mechanisms such as CCS and CHAdeMO may use wired communication technologies embedded in charging cables. Examples of such technologies include power line communication PLC used in CCS, and CAN or CANbus communication used in CHAdeMO.

According to an alternative exemplary embodiment of the present disclosure, when the pair-and-talk principle is applied to a wired charging process, charging may be performed as follows.

The customer may park the mobility in front of a charger according to the customer's own selection and may plug a charging cable into the mobility.

Pairing may be performed by one or more of methods including an irDA signal embedded in a coupler, an RFID that is prepared by a charger and is taggable to an inlet of the mobility, a UWB communication technique capable of measuring a distance as in ACD, NFC communication performed between a connector of the charger and the inlet of the mobility, a Control-pilot signal of a CCS connector, a CAN signal of a CHAdeMO connector, and a QR/QCR code attached to the inlet (which may be read by a camera attached to the connector), etc., or the like.

Identification information may be delivered to a layer of a second communication technique such as WLAN. The mobility may be accurately associated with a wireless module of the corresponding charger since the mobility has already been paired.

According to another alternative exemplary embodiment of the present disclosure, the pair-and-talk principle may be applied to WLAN-based wireless power transfer (WPT).

The mobility may approach a charger selected by a user and may enter a charging spot in front of the charger.

The mobility may start discovery and distance measurement using a level-1 communication technique such as UWB and may be connected to a charger closest to the mobility.

Optionally, the mobility may perform precise positioning by using a UWB-based localization method. Precise positioning may position the mobility on a primary core for optimal charging performance.

The mobility may exchange identification information between the mobility and the charger by using a level-1 communication technique such as UWB.

The mobility may be connected to an accurate WLAN AP by using pairing information. Charging communication may begin by using a level-2 communication technique such as WLAN. Subsequent operations may follow matters defined in ISO 15118-20.

When precise positioning by a level-1 communication technique such as UWB is not completed prior to WLAN connection, the mobility and the charger may optionally perform precise positioning also after WLAN connection by using a level-1 communication technique such as UWB.

In another alternative exemplary embodiment of the present disclosure, NFC or RFID as a level-1 communication technique may be used for applying the pair-and-talk principle to WLAN-based wireless power transfer (WPT).

A simple device based on NFC or RFID for pairing may be provided.

The mobility may approach a charger selected by a user and may enter a charging spot in front of the charger.

Within a range of the level-1 communication technique, a pairing device may perform pairing.

The pairing device may be arranged on either the mobility or the EVSE.

In the case of NFC, the mobility may transmit identification information to the charger by NFC. In the case of RFID, the charger may read RFID of the mobility so that the charger may obtain identification information of the mobility.

The mobility may be connected to an accurate WLAN AP by using pairing information.

In the case of NFC, the mobility may be connected to the AP by using the same identification information obtained by NFC.

In the case of RFID, the AP may embed identification information of the mobility in its own WLAN management frame so that the mobility may be connected to the AP of the paired charger.

Charging communication may begin by using a level-2 communication technique such as WLAN. Subsequent operations may follow matters defined in ISO 15118-20.

When precise positioning by a level-1 communication technique such as UWB is not completed prior to WLAN connection, the mobility and the charger may optionally perform precise positioning during WLAN communication defined in ISO 15118-20 by using a level-1 communication technique such as UWB.

According to the present disclosure, when the pair-and-talk principle proposed in the present disclosure is applied to the ISO 15118-8 standard, the following matters may be changed.

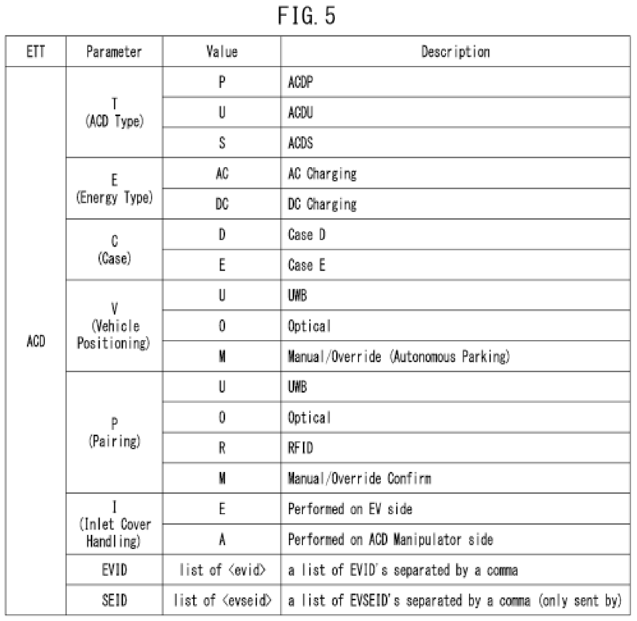

As illustrated in FIG. 5 to be described below, EVSEID and EVID may be added as parameters through additional information definitions of AC, DC, WPT, and ACD charging.

EVID may be provided as a list of EVIDs of mobilities paired with a charger associated with an AP.

For example, multiple EVIDs may be separated by a comma, such as EVID=12a,5XY,z2L.

EVSEID may be provided as a list of EVSEs associated with the AP and may be separated by a comma.

For example, multiple EVSEIDs may be included in a list, such as EVSEID=2T3,53,709.

Since one AP may manage multiple chargers or EVSEs on an EVSE side, a list of multiple EVSEIDs may be provided, and since one EVSE is already selected on a mobility side, only one EVID may be transmitted.

Since one AP may manage multiple chargers or EVSEs, one AP may be associated and/or paired with multiple mobilities.

According to another alternative exemplary embodiment of the present disclosure, various pairing methods may be proposed depending on whether a pairing device is used.

When both the mobility and the charger exchange identifiers with each other (UWB, CAN, irDA, etc.), two-way pairing may be performed.

The AP may provide an SEID, and the mobility may provide an EVID.

The mobility may select one AP having one SEID obtained by pairing, and the AP may accept pairing with the mobility having an EVID that matches the EVID obtained by pairing.

In an alternative exemplary embodiment, one-way pairing on EV in which the mobility transmits an identifier to the charger may be performed (RFID, NFC, etc.).

The AP may provide both EVID and SEID.

The mobility may provide only EVID.

The mobility may select an AP having the mobility's EVID transmitted during pairing.

In an alternative exemplary embodiment, one-way pairing on charger in which the charger transmits an identifier to the mobility may be performed (Control Pilot of IEC 61851-1, etc.).

The AP may provide an SEID.

The mobility may provide both EVID and SEID.

The mobility may select an AP having an SEID obtained during pairing.

After pairing is completed and a wireless connection is accurately established, pairing identifiers including EVID and SEID may be used in SDP request and response messages.

EVID information may be used by an SDP server so that the SDP server may allow the mobility to accurately identify an SECC responsible for an EVSE that is already paired with the mobility.

EVSEID information may be used so that the mobility may confirm, through the SDP server, the SECC responsible for the EVSE that is already paired with the mobility.

A level-1 communication technique such as UWB is a localization-specialized communication technique that may perform vehicle positioning and pairing, and pairing or positioning may be performed together with auxiliary means such as RFID and a camera. Such a process may be achieved by additionally using vision information obtained from auxiliary means such as a near-field communication network such as RFID, BLE, irDA, or optical means or imaging devices.

In an alternative exemplary embodiment of the present disclosure, a communication technique such as UWB may be used in pairing so that positioning and pairing may be performed simultaneously. Coordinate information of ACD_EV and ACD_SE may be added to messages delivered between entities during pairing and positioning.

Examples of key messages may include ACDInitialSetup, ACDPositioning, ACDPairing, ACDDocking, ACDUndocking, etc., or the like.

Docking and undocking may mainly be handled by robotics, such as a manipulator and/or a robot arm. According to an alternative exemplary embodiment of the present disclosure, an ACD system may additionally use proprietary communication such as BLE or UWB for docking and undocking.

As shown in FIG. 2, a session including a modified exemplary embodiment based on ISO 15118-20 using UWB and WLAN is illustrated overall. That is, the exemplary embodiment of FIG. 2 may include UWB-based discovery and connection (S210) and precise positioning and pairing (S224) using UWB.

In operation S210, the electric mobility and the EVSE (ACD) discover and connect to the closest UWB. A level-1 communication technique such as UWB has a narrow range and is optimized for roles such as localization so that the electric mobility may discover the closest EVSE (ACD) with low cost.

In operation S224 of positioning, the electric mobility moves to a dockable location or a mateable position and may be controlled so that the electric mobility adjusts the mobility's position or provides necessary guidance to a driver.

In operation S224 of pairing, the electric mobility may obtain a WLAN network ID, by which the electric mobility may connect to WLAN, using UWB, and the EVSE may obtain an EVID that allows the EVSE to connect to the electric mobility using UWB.

Sessions such as the initial setup (S220), authorization/service negotiation (S230), parameters exchange (S232), docking (S240), charging (S250), and undocking (S260) may be included.

The WLAN connection session (S210) may include an L2 setup and compatibility check using ISO 15118-8. The SDP session for WLAN (S212) may include SECC discovery and compatibility filtering. The initial setup session (S220) may include parameter negotiation. The initial setup session (S220) may mainly use WLAN but may additionally use UWB, etc., to perform compatibility checking and parameters exchange (S232).

The positioning session (S224) may position a vehicle in a docking region using UWB, etc., and an ACD may record the result. The pairing session (S224) may ensure correct pairing between an electric vehicle and an SECC and/or an ACD using UWB, etc.

The docking session (S240) may cause docking to be performed by an ACD using WLAN, and the ACD may record the result. The undocking session (S260) may cause undocking to be performed by an ACD, and the ACD may record the result. When ISO 15118-based ACD charging communication is terminated (S270), UWB-based wireless LAN connections may be disconnected (S280) before or together with disconnection (S280) of the communication.

The WLAN connection session (S210) may use a discovery and connection session of ISO 15118-8 L2. For example, an SECC may broadcast a beacon (VSE={ETT:0x08, AI: ACD:T=S:C=D:V=U:P=U:I=E}).

An EVCC may transmit a Probe Request to the SECC (VSE={ETT:0x08, AI: ACD:T=S:C=D:V=U:P=U:I=E:ID=ABCD123 }).

The SECC may feed back a Probe Response to the EVCC (VSE={ETT:0x08, AI: ACD:T=S:C=D:V=U:P=U:I=E}). Such a process may constitute part of active scanning.

An Association Request (VSE={ETT:0x08, AI: ACD:T=S:C=D:V=U:P=U:I=E:ID=ABCD123}) and an Association Response (Result = Success) may additionally be transmitted and received between the EVCC and the SECC.

Edition 3 of ISO 15118-8 may be used. The EVCC and the SECC may check compatibility with each other and may associate with each other using a VSE (Vendor Specific Element). The VSE field may refer to IEEE 802.11 management frames.

The ETT shared by messages between the EVCC and the SECC may indicate an Energy Transfer Type, and AI is an abbreviation for Additional Information and may describe detailed optional parameters.

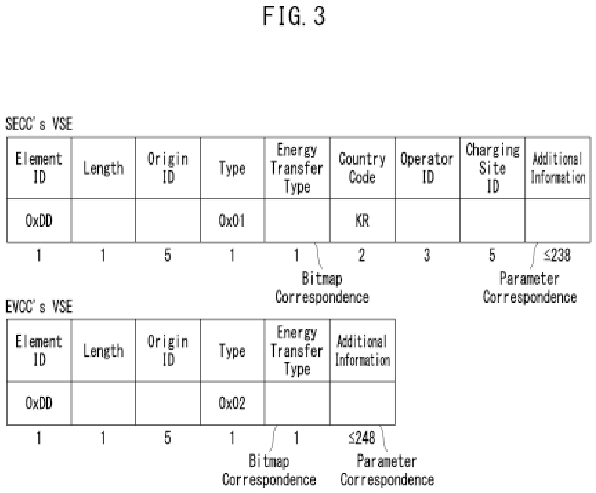

FIG. 3 is a conceptual diagram illustrating VSEs of an SECC and an EVCC employable in a discovery and connection session according to an exemplary embodiment of the present disclosure.

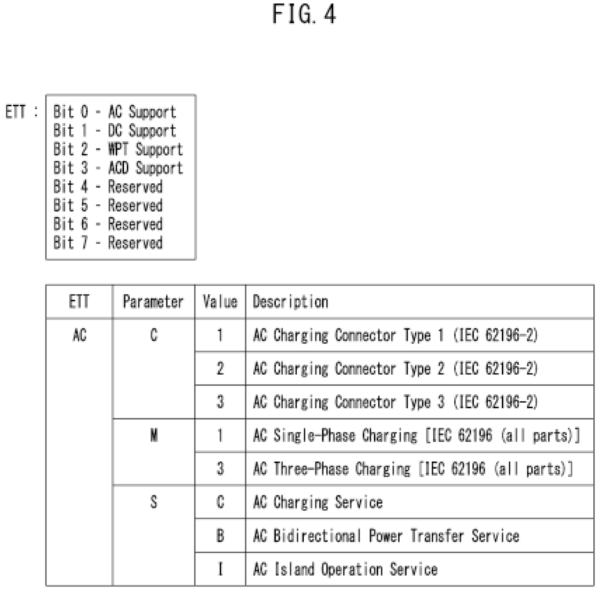

FIG. 4 is a conceptual diagram illustrating an ETT (Energy Transfer Type) configuration employable in a discovery and connection session according to an exemplary embodiment of the present disclosure.

As shown in FIGS. 3 to 4, the EVCC and the SECC may check compatibility with each other and may be connected according to communication protocols such as ISO 15118-8. The connection may use a VSE (Vendor Specific Element) of IEEE 802.11 management frames, an ETT (Energy Transfer Type), or additional information (AI: Additional Information) as detailed optional parameters.

FIG. 5 is a conceptual diagram illustrating a proposal for changes to an ISO 15118-8-based ACD ETT employable in an ACD charging communication method according to an exemplary embodiment of the present disclosure.

As shown in FIGS. 3 to 5, when an ACD includes all ACD types such as ACDP, ACDU, and ACDS, the ETT may not need to be changed.

The additional information (AI) may be represented as a variable-length UTF-8 string. For example, it may be represented as follows:
<ETT>:<param>=<val>:***:<param>=<val>:<ETT>:<param>=<val>:***

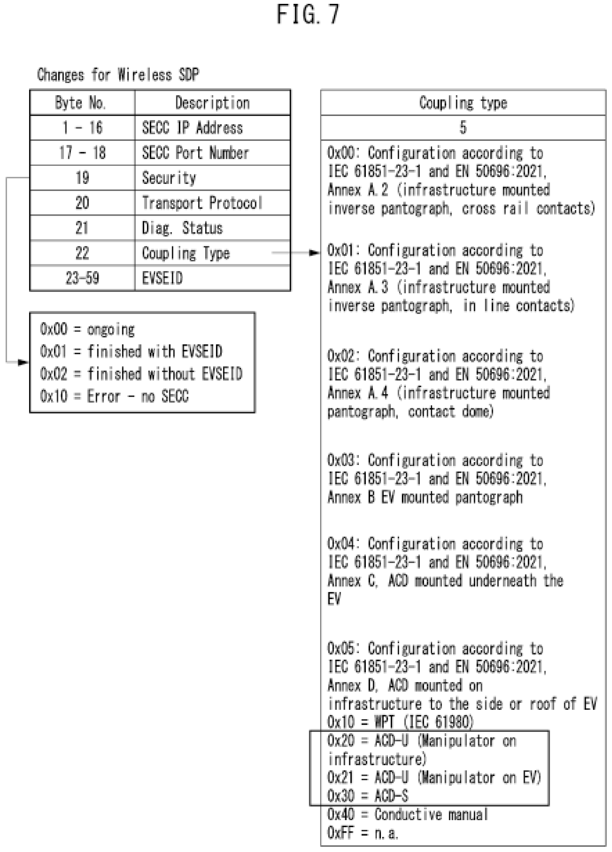

For example, ETT=0x01 may indicate AC-only, and the AI may be represented as "AC:C=1:M=1:S=B". An example of the AI representation for such an ETT (AC-only) may be illustrated as shown in FIG. 7.

Here, ACD parameters may define only an EVID. This may assist in fast and accurate pairing. Additional parameter definitions are required depending on the ACD type. This will be described in detail below.

As shown in FIG. 5, exemplary changes to ISO 15118-8 for an ACD may be confirmed. The ACD ETT may be extended together with the additional information. Furthermore, EVID and SEID parameters may be added.

For example, the following expression may be possible:
"ACD:T=S:E=DC:C=D:V=U:P=U:I=E:EVID=ABC,123:SEID=23T,23,XYZ"

Referring again to FIG. 2, in a cooperation process of the WLAN connection session (S210), the EVCC and the SECC may perform the WLAN connection session (S210) by using the VSE of the SECC in a beacon and probe response, and the VSE of the EVCC in a probe request message and negotiation/renegotiation request messages.

For example, the ETT and AI of the SECC's VSE may be represented as follows:
ETT=0x08: supports ACD charging only
AI="ACD:T=S:E=DC:C=D:V=U:P=U:I=E:ID=HMC-1234"

That is, the AI delivered from the SECC to an EVCC identified as HMC-1234 may indicate an ACDS type, DC charging, Case D, positioning by UWB, pairing by UWB, and an inlet manipulated by the electric vehicle.

Furthermore, the ETT and AI of the EVCC's VSE may be represented as follows:
ETT=0x08: supports ACD charging only
AI="ACD:T=S:E=DC:C=D:V=U:P=U:I=E:ID=KRKEP-1234"

That is, the AI delivered from the EVCC to an SECC identified as KRKEP-1234 may indicate an ACDS type, DC charging, Case D, positioning by UWB, pairing by UWB, and an inlet manipulated by the electric vehicle.

Although not illustrated in FIGS. 2 to 7, before performing the SDP session (S212) after the WLAN connection session (S210), a WPA2/WPA3 Layer 2 Security session may optionally be performed between the EVCC and the SECC to strengthen security.

Referring again to FIG. 2, as an exemplary embodiment of the SDP session (S212) after the WLAN connection session (S210), the EVCC and the SECC may perform an ISO 15118-20-based L3 discovery and connection procedure.

The EVCC may broadcast (Broadcast) SDP (SECC Discovery Protocol) Request (PPD=UWB, Coupler=ACD-S, EVID="1234") to the SDP.

The SDP may respond to the EVCC with SDP Response (Coupler=ACD-S, EVSEID="ABCD", DiagStatus=FinishedwithEVSEID).

The SDP may provide connection information (IP number / port number) of the SECC to the EVCC and the SECC. The SDP may exchange compatibility information (coupler type, charging type, etc., or the like) with the EVCC and the SECC. The SDP may exchange pairing IDs (EVID, EVSEID) with the EVCC and the SECC.

Although not shown in FIG. 2, a TCP & TLS Connection Establishment session may be performed between the EVCC and the SECC after the SDP session (S212).

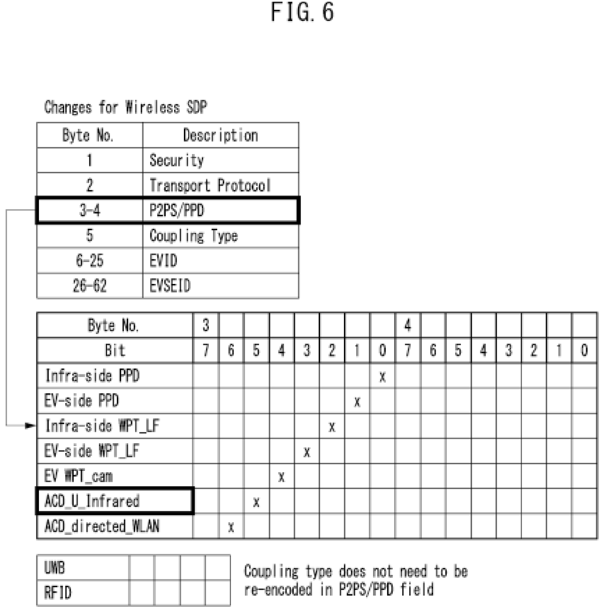

FIGS. 6 and 7 illustrate conceptual diagrams showing proposed modifications of the Service Discovery Protocol (SDP) employable in an ACD charging communication method according to an exemplary embodiment of the present disclosure.

In the SDP, the EVCC and the SECC may provide connection information of the SECC, such as an IP number and/or a port number, exchange compatibility information such as a coupler type and a charging type, and exchange pairing identifiers such as an EVID and an EVSEID.

The above-described SDP parameter set may change an SDP wireless environment. In a case in which UWB or RFID is used, a coupling type between the EVCC and the SECC may not need to be re-encoded in P2PS and/or PPD fields.

Referring again to FIG. 2, a protocol renegotiation (Protocol Nego.) procedure may be performed as part of an Initial Setup session (S220). In a stage of SupportedAppProtocol, the EVCC and the SECC may negotiate a protocol to be used. There are four namespaces that may currently be selected in ISD 15118-20. The four different namespaces are as follows:
urn:iso:std:iso:15118:-20:AC
urn:iso:std:iso:15118:-20:DC
urn:iso:std:iso:15118:-20:WPT
urn:iso:std:iso:15118:-20:ACDP

In the exemplary embodiment, in addition to the above four namespaces, four further namespaces are added. The additional namespaces are as follows:
urn:iso:std:iso:15118:-20:ACDS-AC
urn:iso:std:iso:15118:-20:ACDS-DC
urn:iso:std:iso:15118:-20:ACDU-AC
urn:iso:std:iso:15118:-20:ACDU-DC

Even when the above eight namespaces are used, no modification may be required in a subsequent SessionSetup.

When an ISO 15118-20 Protocol Nego. session is used, the EVCC may transmit, to the SDP, a SupportedAppProtocolReq (namespace="iso:15118:-20:ACDS-DC", SchemaID=1), and the SDP may feed back, to the EVCC, a SupportedAppProtocolRes (SchemaID=1, OK).

Meanwhile, the EVCC may provide an EVCCID, and the SECC may provide an EVSEID and a session ID. The session ID may be provided through a header of a message. The session ID may be set to match the "ID" in the VSE of a WLAN frame.

For example, in ISO 15118-20 SessionSetup, the EVCC may transmit, to the SDP, a SessionSetupReq (EVCCID="HKM1234"), and the SDP may feed back, to the EVCC, a SessionSetupRes (EVSEID="KEPCO1234").

Meanwhile, the EVCC and the SECC may trigger a wake-up command to an ACD device during initialization of a wireless LAN device in preparation for pairing and positioning. The EVCC may trigger a wake-up command to a secondary assembly (ACD_EV), and the SECC may trigger a wake-up command to a primary assembly (ACD_SE). When activation of the ACD device is not completed, the EVCC and the SECC may obtain configuration information from the ACD device. The configuration information may include a MAC address of the ACD device. The obtaining of the configuration information may be optionally performed.

A WPT (Wireless Power Transfer) sequence employable in an ACD charging communication method according to an exemplary embodiment of the present disclosure may sequentially perform, after SessionSetup, a WPT_FinePositioningSetup, a WPT_FinePositioning, a WPT_Pairing, and an AuthorizationSetup session.

Further, a WPT sequence according to an exemplary embodiment of the present disclosure may sequentially perform, after ServiceSelection and after the vehicle pauses, a WPT_ChargeParameterDiscovery, a ScheduleExchange, a WPT_AlignmentCheck, and a PowerDelivery session. The PowerDelivery session may be performed in parallel with a WPT_chargeLoop session and may mutually reference results of the respective sessions. When the PowerDelivery session is completed, a SessionStop session may be performed, and the sequence may be terminated.

An ACDP (ACD Pentagraph) sequence employable in an ACD charging communication method according to an exemplary embodiment may sequentially perform, after SessionSetup, an ACDP_VehiclePositioning and an AuthorizationSetup. In addition, an ACDP sequence according to an exemplary embodiment may sequentially perform, after ServiceSelection, a DC_ChargeParameterDiscovery, a ScheduleExchange, an ACDP_Connect, a DC_CableCheck, a DC_Precharge, and an ACDP_Disconnect. After the DC_Precharge session is performed, a PowerDelivery session may be performed. The PowerDelivery session may be performed in parallel with a DC_ChargeLoop session and may mutually reference results of the respective sessions. The ACDP_Disconnect may be performed with reference to results of the ACDP_Connect, DC_CableCheck, DC_Precharge, PowerDelivery, and DC_ChargeLoop sessions.

An ACDU (ACD underbody) AC sequence employable in an ACD charging communication method according to an exemplary embodiment may sequentially perform, after SessionSetup, an ACDU_Setup, an ACDU_EVPositioning, an ACDU_Pairing, and an AuthorizationSetup session.

Further, an ACDU AC sequence according to an exemplary embodiment may sequentially perform, after ServiceSelection and after the electric vehicle pauses, an AC_ChargeParameterDiscovery, a ScheduleExchange, an ACDU_Docking, a PowerDelivery, and an ACDU_Undocking session. When docking fails after the ACDU_Docking session, the process may return to the ACDU_Setup session. The PowerDelivery session may be implemented to be performed together with an ACDU_AC_ChargeLoop session while a charging loop is formed and maintained. When the PowerDelivery session is completed and the ACDU_Undocking session is performed, the ACDU AC sequence may be terminated by the SessionStop session. When an Authorization/Service done state is reached after the ACDU_Pairing session, intermediate sessions may be omitted, and the ACDU_Docking session may be performed.

An ACDS (ACD Sidearm) DC sequence employable in an ACD charging communication method according to an exemplary embodiment may sequentially perform, after SessionSetup, an ACDS_Setup, an ACDS_EVPositioning, an ACDS_Pairing, and an AuthorizationSetup session.

Further, an ACDS DC sequence according to an exemplary embodiment may sequentially perform, after ServiceSelection and after the electric vehicle pauses, an ACDS_ChargeParameterDiscovery, a ScheduleExchange, an ACDS_Docking, a DC_CableCheck, a DC_PreCharge, a PowerDelivery, and an ACDS_Undocking session. When docking fails after the ACDS_Docking session, the sequence may return to the ACDS_Setup session. The PowerDelivery session may be implemented to be performed together with an ACDS_ChargeLoop session while a charging loop is formed and maintained. When the PowerDelivery session is completed and the ACDS_Undocking session is performed, the ACDS DC sequence may be terminated by the SessionStop session. When an Authorization/Service done state is reached after the ACDS_Pairing session, intermediate sessions may be omitted, and the ACDS_Docking session may be performed.

Referring again to FIG. 2, an ACD setup session (S220) of an ACD charging communication method according to an exemplary embodiment of the present disclosure is employable to include, within a configuration request message and a configuration response message in an ACDS or an ACDU, negotiation methods for positioning, pairing, docking, and inlet handling, and to add other parameters required for supported methods. EV may provide a list of supported methods or types, and EVSE may select one thereof.

Negotiable parameters may include a positioning method, a pairing method, a docking type, an inlet handling type, a mating space, an operating space, and all additional parameters related to supported methods. Additional parameters may include, in a case of UWB, a UWB address and UWB configuration and ranging parameters, and in a case of RFID, an RFID tag identifier.

For example, the EVCC may transmit, to the SECC, a message of ACDS_SetupReq (Positioning=UWB|Optical, Pairing=UWB|RFID, Docking=D, Inlet=EVISE, MatingSpace=XYZ, [UWBEV=<UWBEV Addr>]). The SECC may feed back, to the EVCC, ACDS_SetupRes (Positioning=UWB, Pairing=RFID, Docking=D, Inlet=EV, OperatingSpace=XYZ, [UWBSE=<UWBSE Addr>, <UWB-Conf>, <Ranging-Conf>]).

Further, in another exemplary embodiment of the present disclosure, for UWB connections for ranging and pairing, information on new UWB connections and ranging configuration between EV and ACD based on a given configuration may be included as negotiable parameters. The UWB connection for such ranging and pairing may be optionally performed.

For example, the EVCC may transmit, to the ACD_EV, a "Configure (<UWB-Conf>, <Ranging-Conf>, <UWBSE Addr>)" message to support parameter configuration of a secondary assembly, and the SECC may transmit, to the ACD_SE, a "Configure (<UWB-Conf>, <UWBEV Addr>)" message to support parameter configuration of a primary assembly.

Meanwhile, an ACD positioning session employable in an ACD charging communication method according to an exemplary embodiment of the present disclosure may repeatedly exchange, between the EVCC and the SECC, an ACDS EV positioning request message and an EV positioning response message of an ACDS until positioning is completed. Actual positioning may be performed through UWB. Actual execution of positioning may occur outside a V2G communication range, and, if necessary, parameters for a potential positioning method may be added.

A vehicle positioning process using a UWB communication network may be performed with reference to IEC 61851-27 Annex D.

For example, the EVCC may transmit, to the SECC, "ACDS_EVPositioningReq (EVProcessing=Ongoing, EVResult=Unknown)," and the SECC may feed back, to the EVCC, "ACDS_EVPositioningRes (EVSEProcessing=Ongoing, EVSEResult=Unknown)."

The EVCC may transmit "Positioning-Start( )" to the ACD_EV, and the SECC may transmit "Positioning-Start( )" to the ACD_SE. The ACD_EV may feed back, to the EVCC, "Positioning-Status(Ongoing, ...)," and the ACD_SE may feed back, to the SECC, "Positioning-Status(Finished)."

The EVCC may then transmit, to the SECC, "ACDS_EVPositioningReq (EVProcessing=Finished, EVResult=Success)," and the SECC may feed back, to the EVCC, "ACDS_EVPositioningRes (EVSEProcessing=Finished, EVSEResult=Success)."

In an ACD pairing session employable in an ACD charging communication method according to another exemplary embodiment of the present disclosure, pairing may be optionally performed using a PPD (Pairing-Positioning Device), such as RFID or UWB, in ACDS pairing request and response messages. When positioning through UWB provides reliability for pairing, pairing may be omitted.

The PPD may provide an identifier (ObservedID) of an opposite side. Thus, a PPD of EV may operate to allow EV to transmit an ObservedID of the opposite side, and a PPD of EVSE may operate to allow EVSE to transmit an ObservedID of the opposite side.

For example, the EVCC may transmit, to the SECC, "ACDS_PairingReq (EVProcessing=Ongoing, EVResult=Unknown)," and the SECC may feed back, to the EVCC, "ACDS_PairingRes (ObservedID="ev_rfid", EVSEProcessing=Ongoing, EVSEResult=Unknown)."

The EVCC may transmit, to the SECC, "ACDS_PairingReq (EVProcessing=Finished, EVResult=Success)," and the SECC may feed back, to the EVCC, "ACDS_PairingRes (EVSEProcessing=Finished, EVSEResult=Success)."

Referring again to FIG. 2, in an exemplary embodiment of Authorization / Service Negotiation (S230) and Parameter Exchange (S232), after WLAN connection (S210), procedures of AuthorizationSetup, Authorization, ServiceDiscovery, ServiceDetail, ServiceSelection, DC_ChargeParameterDiscovery, and ScheduleExchange may proceed in the described order.

In a ServiceDiscovery procedure employable in an ACD charging communication method according to an exemplary embodiment of the present disclosure, new service identifier definitions may be added.

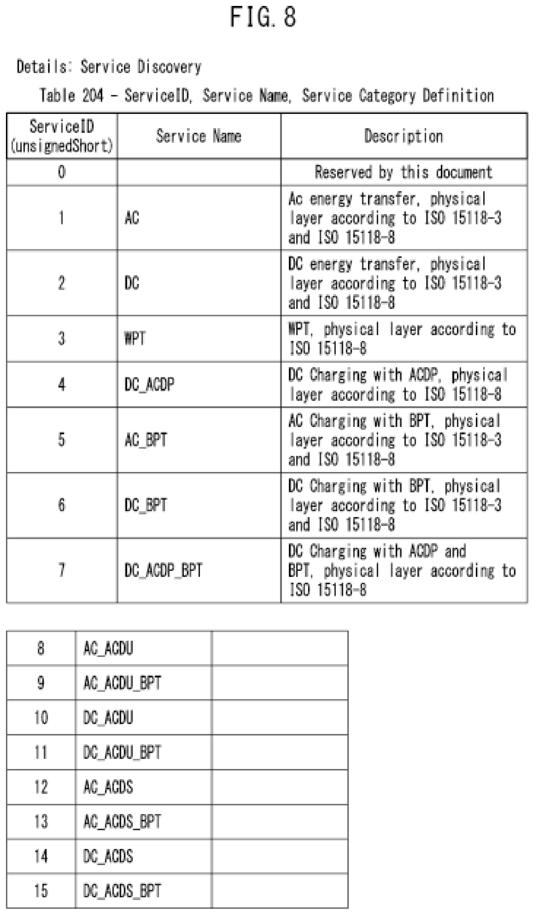

FIG. 8 illustrates a conceptual diagram showing proposed new service IDs employable in a ServiceDiscovery session according to an exemplary embodiment of the present disclosure.

As shown in FIG. 8, new service identifier definitions may be added in addition to eight existing service IDs (0 through 7), and service IDs 8 through 15 and their definitions may be added.

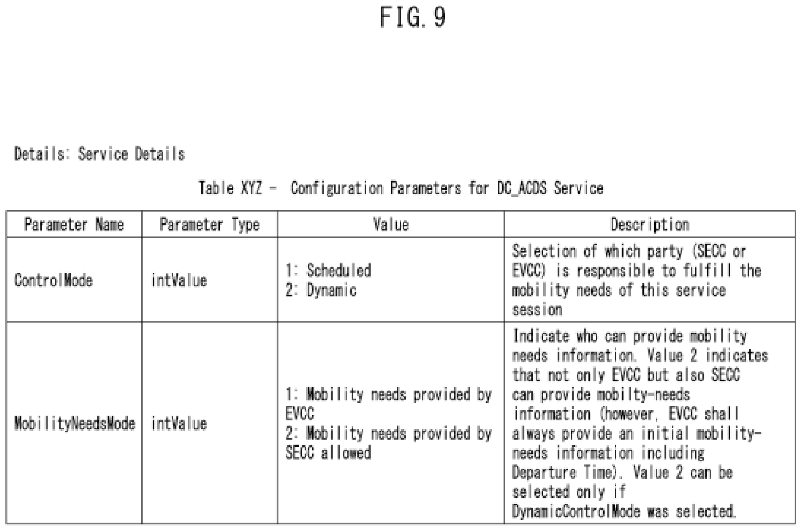

FIG. 9 is a conceptual diagram illustrating a proposal for configuration parameters of a DC-ACDS service employable in a service detail format according to an exemplary embodiment of the present disclosure.

Referring again to FIG. 2 together with FIG. 9, a ServiceDetail procedure of an automatic connection device (ACD) employable in an ACD charging communication method according to an exemplary embodiment of the present disclosure is described.

In the ServiceDetail procedure, service parameters for AC and DC, ACDS and ACDU, and bidirectional power transfer (BPT) may be defined.

All ACD-specific parameters may be determined in an ACDS configuration request and an ACDS configuration response. For example, a control mode and a mobility needs mode may be defined.

For example, the EVCC may transmit, to the SECC, an "AuthorizationSetupReq (*)" message, and the SECC may feed back, to the EVCC, an "AuthorizationSetupRes (*)" message. The EVCC may subsequently transmit, to the SECC, an "AuthorizationReq (*)" message, and the SECC may feed back, to the EVCC, an "AuthorizationRes (*)" message.

In a ServiceDiscovery stage, the EVCC may transmit, to the SECC, a "ServiceDiscoveryReq ( )" message, and the SECC may feed back, to the EVCC, a "ServiceDiscoveryRes (EnergyTransferServiceList=[{ServiceID=14}, ...])" message.

As shown in a ServiceID table of FIG. 8, when the ServiceID in the message fed back by the SECC is 11, the ServiceName may be interpreted as DC_ACDU_BPT, and when the ServiceID is 14, the ServiceName may be interpreted as DC_ACDS.

The EVCC may request detailed information with reference to the ServiceID information of the feedback message from the SECC. For example, the EVCC may transmit, to the SECC, a "ServiceDetailReq (ServiceID=14)" message. The SECC may feed back, to the EVCC, a "ServiceDetailRes (ServiceID=14, ServiceParameterList={ParameterSetID=1, Parameter=...})" message.

When the SECC feeds back ServiceID=14, the EVCC may request detail information for ServiceID=14. Even when the SECC feeds back ServiceID=11, the EVCC may alternatively request detail information for ServiceID=14.

Thus, service parameters may be defined to include information regarding AC and DC, information regarding ACDS/ACDU, and information regarding support of BPT (bidirectional power transfer). All ACD-specific parameters may be determined through ADCS/U_SetupReq/Res messages.

A ServiceSelection procedure of an automatic connection device (ACD), a DC_ChargeParameterDiscovery procedure of an ACD, and a ScheduleExchange procedure of an ACD employable in an ACD charging communication method according to an exemplary embodiment of the present disclosure are described.

Service identifiers (ServiceID) may be used in messages such as a ServiceDiscoveryRes, a ServiceDetailReq, a ServiceDetailRes, a ServiceSelectionReq, and a ServiceSelectionRes, and additional information such as an EnergyTransferServiceList and a ServiceParameterList may be used.

For example, the EVCC may transmit, to the SECC, a "ServiceSelectionReq (ServiceID=14)" message, and the SECC may feed back, to the EVCC, a "ServiceSelectionRes (SelectedEnergyTransferService {ServiceID=14, ParameterSetID=1})" message.

The EVCC may transmit, to the SECC, a "DC_ChargeParameterDiscoveryReq (*)" message, and the SECC may feed back, to the EVCC, a "DC_ChargeParameterDiscoveryRes (*)" message.

The EVCC may transmit, to the SECC, a "ScheduleExchangeReq (*)" message, and the SECC may feed back, to the EVCC, a "ScheduleExchangeRes (*)" message.

A Docking procedure (S240) of an automatic connection device (ACD) employable in an ACD charging communication method according to an exemplary embodiment of the present disclosure, and procedures after docking (S240 and subsequent) may be performed as follows.

Welding detection during charging may be performed as part of a charging session (S250), and an Undocking procedure (S260) and a post-Undocking procedure (S260) may be performed.

For convenience of description, the following messages are described assuming an ACDS exemplary embodiment, although the concept of the present disclosure is implementable for other ACD types such as an ACDU or an ACDP.

For example, in an ACDS docking request and docking response (S240), docking may be performed by a robotic manipulator or robot arm of an ACD or by a robotic manipulator or robot arm of an EV. The docking process may be performed by a manual operation of a human or another technology including automatic or semi-automatic functions. A docking request message or a docking response message may include information regarding electrical and mechanical state monitoring and reporting of docking status or results.

For example, the EVCC may transmit, to the SECC, an "ACDS_DockingReq (CPState=A, EVProcessing=Ongoing, EVResult=Unknown)" message, and the SECC may feed back, to the EVCC, an "ACDS_DockingRes (CPState=A, ManPosition=Home, EVSEProcessing=Ongoing, EVSEResult=Unknown)" message.

After docking is completed, the EVCC may transmit, to the SECC, an "ACDS_DockingReq (EVProcessing=Finished, EVResult=Success)" message, and the SECC may feed back, to the EVCC, an "ACDS_DockingRes (EVSEProcessing=Finished, EVSEResult=Success)" message.

After docking, the EVCC and the SECC may perform procedures such as CableCheck, PreCharge, PowerDelivery, and ChargeLoop (S240).

The process may be performed, for example, such that a cable check is performed by EVCC transmitting "DC_CableCheckReq (*)" to SECC and SECC feeding back "DC_CableCheckRes (*)" to EVCC, a precharge is performed by EVCC transmitting "DC_PreChargeReq (*)" to SECC and SECC feeding back "DC_PreChargeRes (*)" to EVCC, and a preparation process for starting a charging process is performed by EVCC transmitting "PowerDeliveryReq (Start)" to SECC and SECC feeding back "PowerDeliveryRes (*)" to EVCC.

Subsequently, EVCC may transmit "MotionFollow(Start)" to ACD_EV and SECC may transmit "MotionFollow(Start)" to ACD_SE such that ACD motion control of both sides is performed.

Thereafter, EVCC may transmit "DC_ChargeLoopReq (*)" to SECC such that a charging loop state of EV and EVSE is checked and reported/shared from SECC to EVCC.

ACD_EV may transmit "Charging-Status( )" to EVCC and ACD_SE may transmit "Charging-Status( )" to SECC such that charging loop states of both ACDs are reported to EVCC and SECC.

When a predetermined condition related to a charging loop state is reached, SECC may feed back "DC_ChargeLoopRes (*)" to EVCC.

EVCC may transmit "PowerDeliveryReq (Stop)" to SECC and SECC may feed back "PowerDeliveryRes ( )" to EVCC such that power transfer is terminated.

EVCC may transmit "MotionFollow(Stop)" to ACD_EV and SECC may transmit "MotionFollow(Stop)" to ACD_SE such that ACD motion control of both sides is controlled according to termination of a charging mode and motion control is also terminated.

An automatic connection device (ACD) welding detection and post-welding detection procedure employable in the ACD charging communication method according to an exemplary embodiment of the present disclosure is illustrated (S250, S260).

For example, in ACDS undocking request and undocking response (S260), undocking may be performed by a robot manipulator or robot arm of the ACD or a robot manipulator or robot arm of EV. The undocking process may also be performed using other technologies involving a manual operation of a person. An undocking request message or an undocking response message may include information regarding electrical/mechanical state monitoring and undocking result reporting.

During a charging process, EVCC may transmit "DC_WeldingDetectionReq (*)" to SECC and SECC may feed back "DC_WeldingDetectionRes (*)" to EVCC. The message may indicate that charging is still in progress. The process may be repeatedly performed according to a predetermined condition while charging continues.

When EVCC again transmits "DC_WeldingDetectionReq (*)" to SECC and SECC feeds back "DC_WeldingDetectionRes (*)" to EVCC, charging may be determined to be completed.

For termination of charging and performing undocking, EVCC may transmit "ACDS_UndockingReq (CPState=A, EVProcessing=Ongoing, EVResult=Unknown)" to SECC and SECC may feed back "ACDS_UndockingRes (CPState=A, ManPosition=Home, EVSEProcessing=Ongoing, EVSEResult=Unknown)" to EVCC.

After undocking is completed, EVCC may transmit "ACDS_UndockingReq (EVProcessing=Finished, EVResult=Success)" to SECC and SECC may feed back "ACDS_UndockingRes (EVSEProcessing=Finished, EVSEResult=Success)" to EVCC.

After both EVCC and SECC share that undocking is finished and the undocking result is success, EVCC may transmit "SessionStopReq (ChargingSession=Terminate)" to SECC and SECC may feed back "SessionStopRes (OK)" to EVCC such that a session between EVCC and SECC is terminated.

EVCC may transmit "Finish( )" to ACD_EV and SECC may transmit "Finish( )" to ACD_SE such that both ACDs also terminate an entire charging session.

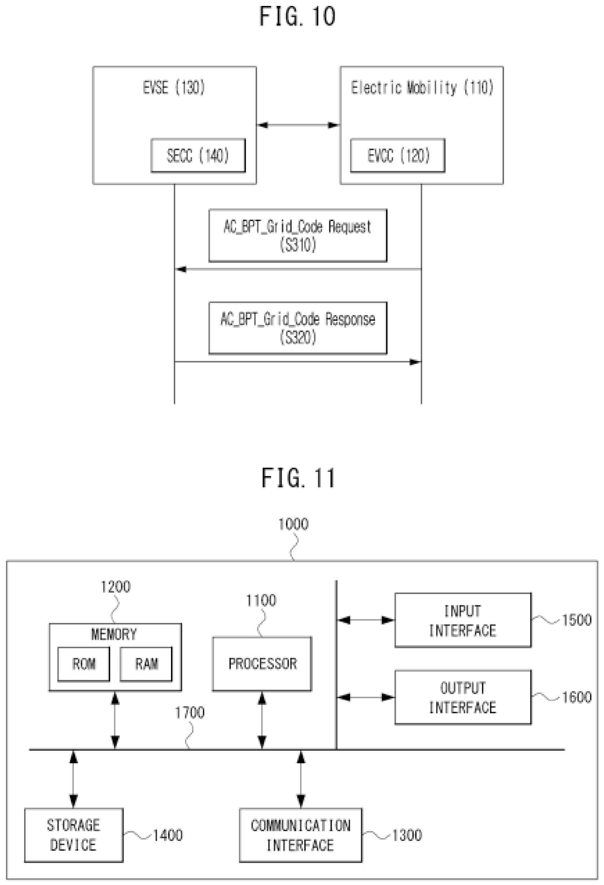

FIG. 10 is a conceptual diagram illustrating in detail a charging communication process employing a grid code according to an exemplary embodiment of the present disclosure.

A charging communication method for electric mobility according to an exemplary embodiment of the present disclosure is a communication method executed by an electric vehicle communication controller (EVCC) of electric mobility, and may include obtaining, by EVCC, a grid code related to a bidirectional power transfer (BPT) function from an electric vehicle supply equipment (EVSE) that transfers electric power to electric mobility (S310), receiving, by EVCC, a message including a grid code of a power network to which EVSE belongs from EVSE (S320), and performing, by EVCC, a procedure related to a bidirectional power transfer function based on the grid code of EVSE (S240 to S280).

In a charging communication method executed at EVCC according to an exemplary embodiment of the present disclosure, a power grid code may include information of a country, region, or institution of a power network to which EVSE belongs.

Table 1 below illustrates an exemplary xml-based specification of a message including GridCode.

**[Table 1]**

| | | |
|---|---|---|
| <GridCode> | | |
| | <CommonParam> ... | |
| | </CommonParam> | |
| | <GridCodeKorea> ... | |
| | </GridCodeKorea> | |
| </GridCode> | | |

As shown in Table 1, a message including a grid code information (a grid code and/or information related to the grid code) may include a portion describing common parameters and may include a grid code indicating a continent, country, or region. For example, expressions such as GridCodeKorea, GridCodeUSA, GridCodeGermany, and GridCodeJapan may be included.

In a charging communication method executed at EVCC according to an exemplary embodiment of the present disclosure, a message including a grid code may include information related to a low voltage ride through (LVRT) or high voltage ride through (HVRT) for responding to a process in which a power supply device is coupled to or decoupled from a power network defined by the power network, or information related to a reactive power response time.

Table 2 below illustrates a more detailed exemplary specification of a message including a grid code information (a grid code and/or information related to the grid code).

**[Table 2]**

| | | |
|---|---|---|
| <GridCode> | | |
| | <CommonParam> ... </CommonParam> | |
| | .... | |
| | <GridCodeKorea> | |
| | | <LVRTMomentCessEnable>True</LV RTMomentCessEnable> |
| | | <LVRTMomentCessVoltage>90</LVR TMomentCessVoltage> |
| | | <LVRTMomentCessRecovery>85</LV RTMomentCessRecovery> |
| | | <HVRTMomentCessEnable>False</H VRTMomentCessEnable> |
| | | <ReactivePowerResponseTimeEnable> True </ReactivePowerResponseTimeEnable> |
| | | <ReactivePowerResponseTime> 3 </Rea ctivePowerResponseTime> |
| | </GridCodeKorea> | |
| </GridCode> | | |

As shown in Table 1 and Table 2, grid code information (a grid code and/or information related to the grid code) may have parameters defined for each exclusive region. For example, parameters such as global, European, Germany, American, Japanese, and Korean may be defined.

Some parameters may be common to all regions.

Group-related parameters may be similar or identical. Each group may have different information and identical or similar information.

Some parameters may be optional or mandatory.

Extensibility of parameters may be expressed. Extensibility may be implemented with concepts of inherit or substitute. Some structures may extend existing structures.

Table 3 below illustrates an exemplary embodiment of parameters transmitted from EVSE to an electric mobility.

**[Table 3]**

| Category | Parameter | References | Already Covered |
|---|---|---|---|
| Low Voltage Ride-Through Momentary Cessation | Enable or Disable (T/F) | EN 50549-1: 4.7.4.2.2 | No |
| | Threshold Voltage (%) | IEEE 2030.5: 10.10.4.3.2 | Yes |
| | | EN 50549-1: 4.7.4.2.2 | |
| | | VDE 4105: 5.7.3.3 (80%) | |
| | Recovery Voltage (%) | EN 50549-1: 4.4.4 operating volt. range (85~110%)VDE 4105: 5.7.3.3 resume range (85-110%) | ? |
| High Voltage Ride-Through Momentary Cessation | Enable or Disable (T/F) | EN 50549-1: 4.7.4.2.2 | No |
| | Threshold Voltage (%) | IEEE 2030.5: 10.10.4.3.2 | Yes |
| | | EN 50549-1: 4.7.4.2.2 | |
| | | VDE 4105: 5.7.3.3 (80%) | |
| | Recovery Voltage (%) | EN 50549-1: 4.4.4 operating volt. range (85~110%)VDE 4105: 5.7.3.3 resume range (85-110%) | ? |
| Reactive Power Response Time | Enable or Disable (T/F) (enable for Europe) | | ? |
| | Time Constant (sec) | EN 50549-1: 4.7.2.3.3 time constant | ? |

Messages exchanged between an electric mobility and an EVSE may include information related to a grid code.

A message may include a Session ID (for example, up to 255 bytes) as a header, may include unique IDs of EVCC and SECC (for example, strings of up to 255 bytes), and may include a TimeStamp (for example, a 4-byte integer).

When a message including information related to a grid code is exchanged in the Initial Setup (S220) process, the message may be a Session Setup Req message or a Session Setup Res message.

When a message including information related to a grid code is exchanged in the Service Negotiation (S230) process, the message may be a SupportedAppProtocolReq message or a SupportedAppProtocolRes message.

When a message including information related to a grid code is exchanged in the Service Negotiation (S230) process, the message may be a ServiceSelectionReq message or a ServiceSelectionRes message.

When a message including information related to a grid code is exchanged in the Authorization (S230) process, the message may be an AuthorizationSetupReq message or an AuthorizationSetupRes message.

When a message including information related to a grid code is exchanged in the Parameter Exchange (S232) process, the message may be an AC_ChargeParameterDiscoveryReq message or an AC_ChargeParameterDiscoveryRes message.

A message including information related to a grid code may include information related to an electric mobility power transfer function and information related to an EVSE power transfer function, as disclosed in exemplary embodiments of FIG. 3 to FIG. 9.

Such information may include AC BPT support information of an electric mobility, maximum charge power, minimum charge power, energy transfer type, energy transfer mode, and AC BPT support information of an EVSE.

AC BPT-related information collected in procedures of operations S210 to S232 may be used in subsequent procedures in association with a grid code. When information obtained in a subsequent procedure differs from information obtained in a previous procedure, information obtained in the subsequent procedure may replace information obtained in the previous procedure.

In a charging communication method executed at an EVCC according to an exemplary embodiment of the present disclosure, a message including a grid code may include information related to power, voltage, or safety specifications of a process in which power is transferred between an electric mobility and an EVSE.

In a charging communication method executed at an EVCC according to an exemplary embodiment of the present disclosure, operation S310 in which an EVCC requests a grid code and operation S320 in which an EVCC receives a message including a grid code may be performed as part of, or together with, operations S210 to S232 in which an electric mobility and an EVSE exchange information on supported functions and check compatibility between the electric mobility and the EVSE.

For example, in an exemplary embodiment in which compatibility information is checked in operation S210, AC BPT function information among the compatibility information may be associated with grid code information (grid code and/or information related to grid code) and used in procedures after operation S220.

In an exemplary embodiment in which compatibility information is checked in operation S220, AC BPT function information among the compatibility information may be associated with grid code information (grid code and/or information related to grid code) and used in procedures after operation S230.

In an alternative exemplary embodiment, operation S310 in which an EVCC requests grid code information (a grid code and/or information related to the grid code) and operation S320 in which an EVCC receives a message including grid code information (a grid code and/or information related to the grid code) may be performed as part of, or together with, operation S210 or S212 in which an EVCC discovers an EVSE or performs communication connection with a communication network to which an EVSE belongs. Grid code information (a grid code and/or information related to the grid code) may be used in procedures performed after operation S210 or S212.

In an alternative exemplary embodiment, operation S310 in which an EVCC requests grid code information (a grid code and/or information related to the grid code) and operation S320 in which an EVCC receives a message including grid code information (a grid code and/or information related to the grid code) may be performed as part of, or together with, operation S220 in which an EVCC and an EVSE perform an initial setup. Grid code information (a grid code and/or information related to the grid code) may be used in procedures performed after operation S220.

In an alternative exemplary embodiment, operation S310 in which an EVCC requests grid code information (a grid code and/or information related to the grid code) and operation S320 in which an EVCC receives a message including grid code information (a grid code and/or information related to the grid code) may be performed as part of, or together with, operation S230 in which an EVCC and an EVSE perform authorization or service negotiation. Grid code information (a grid code and/or information related to the grid code) may be used in procedures performed after operation S230.

Operation S310 in which an EVCC requests grid code information (a grid code and/or information related to the grid code) and operation S320 in which an EVCC receives a message including grid code information (a grid code and/or information related to the grid code) may be performed as part of, or together with, operation S232 in which parameters are exchanged between an EVCC and an EVSE. Grid code information (a grid code and/or information related to the grid code) may be used in procedures performed after operation S232.

In a charging communication method executed at an EVCC according to an exemplary embodiment of the present disclosure, a message including grid code information (a grid code and/or information related to the grid code) may include information related to power supply capabilities supported by an EVSE. Particularly, whether AC BPT is supported may be included, and message formats and data formats expressing such information may refer to exemplary embodiments of FIG. 3 to FIG. 9.

A charging communication method for charging an electric mobility according to an exemplary embodiment of the present disclosure may be a communication method performed at a supply equipment communication controller (SECC) associated with a primary assembly that transfers power to an electric mobility. The communication method may include receiving, from the electric mobility, a message requesting grid code information (a grid code and/or information related to the grid code) related to a bidirectional power transfer (BPT) function (S310); transmitting, to the electric mobility, a message including grid code information (a grid code and/or information related to the grid code) of a power network to which an EVSE corresponding to the primary assembly belongs (S320); and performing, by the EVSE, a procedure related to a bidirectional power transfer function based on the grid code information (the grid code and/or information related to the grid code) (S240 to S280).

In a charging communication method executed at an SECC according to an exemplary embodiment of the present disclosure, a power grid code may include information of a country, region, or organization of a power network to which an EVSE belongs.

In a charging communication method executed at an SECC according to an exemplary embodiment of the present disclosure, a message including grid code information (a grid code and/or information related to the grid code) may include information related to a low voltage ride through (LVRT) or a high voltage ride through (HVRT) for responding to a process in which a power supply device is coupled to or separated from a power network, or information related to a reactive power response time.

In a charging communication method executed at an SECC according to an exemplary embodiment of the present disclosure, a message including grid code information (a grid code and/or information related to the grid code) may include information related to power, voltage, or safety specifications of a process in which power is transferred between an electric mobility and an EVSE.

In a charging communication method executed at an SECC according to an exemplary embodiment of the present disclosure, operation S310 in which a message requesting grid code information (a grid code and/or information related to the grid code) is received from an electric mobility and operation S320 in which a message including grid code information (a grid code and/or information related to the grid code) is transmitted to the electric mobility may be performed as part of, or together with, operation S210 to S232 in which an electric mobility and an EVSE exchange supported function information and check compatibility.

According to an exemplary embodiment of the present disclosure, performance of electric vehicle charging communication may be improved and user convenience may be enhanced.

According to an exemplary embodiment of the present disclosure, in a charging communication method for charging an electric vehicle, communication between an electric vehicle and an EVSE/SECC and multiple procedures of a charging process between a primary assembly and a secondary assembly may be performed more effectively by using two or more different communication techniques.

According to an exemplary embodiment of the present disclosure, effective message types and data formats may be provided such that procedures for positioning between an electric vehicle and a charging manipulator and procedures for preparation for power supply may be performed in consideration of various types of charging inlets of electric vehicles, various types of electric vehicle supply equipment, and various charging methods.

In the case of AC BPT, since grid codes differ depending on countries/regions and regulations for upper/lower limits of power transfer specifications, transient response, and safety specifications differ depending on grid codes, an exemplary embodiment of the present disclosure may provide a sequence in which an electric mobility receives a grid code from an EVSE and prepares requirements to perform BPT using the grid code.

According to an exemplary embodiment of the present disclosure, an electric mobility may comply with transient response requirements and safety specifications related to power transfer when the electric mobility is coupled to a grid via an EVSE, and may implement necessary hardware settings.

According to an exemplary embodiment of the present disclosure, a sequence, messages, and parameter information in which an electric mobility requests a grid code and receives a response may be provided.

Although not shown in drawings of exemplary embodiments of FIG. 1 to FIG. 10, information related to a docking state or mating state may further include detailed state information related to covers and inlets of both ACDs. In addition, state information may further include minute movements during charging or unmated states during charging.

FIG. 11 is a conceptual block diagram showing an internal structure of a computing system capable of implementing a charging communication device, a generalized ACD, a communication/communication control device included in an ACD, an SECC, an EVCC, a WLAN AP (Access Point) arranged for an EVSE, and a short-range communication device arranged for an electric vehicle or an ACD, according to an exemplary embodiment of the present disclosure.

Although omitted in drawings in the exemplary embodiments of FIG. 1 to FIG. 10, a processor and a memory may be electronically connected to respective components, and operations of respective components may be controlled or managed by the processor.

At least a part of a process of a charging communication method for electric-vehicle charging according to an exemplary embodiment of the present disclosure may be executed by the computing system 1000 of FIG. 11.

As shown in FIG. 11, a computing system 1000 according to an exemplary embodiment of the present disclosure may be configured to include a processor 1100, a memory 1200, a communication interface 1300, a storage device 1400, an input interface 1500, an output interface 1600, and a bus 1700.

The controller or computing system 1000 according to an embodiment of the present disclosure may include at least one processor 1100 and the memory 1200 storing program instructions instructing the at least one processor 1100 to perform at least one operation. At least some of the operations of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the controller 1000 may include the communication interface 1300 that performs communications through a wireless communication network.

Additionally, the controller 1000 may further include the storage device 1400, the input interface 1500, and the output interface 1600.

Additionally, the components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

An electric vehicle communication controller EVCC according to an exemplary embodiment of the present disclosure may be disposed in or mounted to an electric vehicle and may be the EVCC associated with a secondary assembly that receives power from a primary assembly, and may include a processor 1100 that receives at least one instruction from a memory and executes the instruction.

The processor 1100 of the EVCC may request a grid code related to a bidirectional power transfer (BPT) function from an electric vehicle supply equipment (EVSE) corresponding to a primary assembly, may receive a message including a grid code of a power network to which the EVSE belongs from the EVSE, and may perform a procedure related to the bidirectional power transfer function based on the grid code of the EVSE.

In the EVCC according to an exemplary embodiment of the present disclosure, a power grid code may include information of a country, a region, or an authority of a power network to which the EVSE belongs.

In the EVCC according to an exemplary embodiment of the present disclosure, a message including a grid code may include information related to a low voltage ride through (LVRT) or a high voltage ride through (HVRT) defined in a power network for responding to a process in which a power supply device is coupled to or separated from the power network, or may include information related to a reactive power response time.

In the EVCC according to an exemplary embodiment of the present disclosure, a message including a grid code may include information related to power, voltage, or safety specifications of a process in which power is transferred between an electric mobility and an EVSE.

In the EVCC according to an exemplary embodiment of the present disclosure, the processor 1100 may request a grid code from an EVSE or may receive a message including a grid code from an EVSE as part of a process in which an electric mobility and an EVSE exchange function information supported by each other and check compatibility between the electric mobility and the EVSE, or together with a process in which an EVCC and an EVSE exchange function information supported by each other and check compatibility between the electric mobility and the EVSE.

An SECC according to an exemplary embodiment of the present disclosure may be the SECC associated with a primary assembly that transfers power to the electric mobility, and may include a processor 1100 that receives at least one instruction from a memory and executes the instruction.

The processor 1100 of the SECC may receive, from an electric mobility, a message requesting a grid code related to a bidirectional power transfer (BPT) function, may transmit, to the electric mobility, a message including a grid code of a power network to which an electric vehicle supply equipment (EVSE) corresponding to the primary assembly belongs, and may perform a procedure related to a bidirectional power transfer function based on the grid code.

Meanwhile, although most of the exemplary embodiments described above have mainly explained a method in which the electric vehicle or the EVCC first transmits a request, a message, or a parameter that initiates a communication protocol or a communication session in the protocol to the EVSE, the SECC, or the ACD, the present disclosure is not limited to the specific exemplary embodiment, and it is also apparent that the present disclosure may be implemented such that the EVSE, the SECC, or the ACD first transmits a request, a message, or a parameter that initiates a communication protocol or a communication session in the protocol to the electric vehicle or the EVCC. In this case, the transmitter becomes the receiver, and the receiver becomes the transmitter in the corresponding exemplary embodiment, but it is apparent that substantially the same features are maintained.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A charging communication method for charging an electric mobility, performed by an electric vehicle communication controller (EVCC) of an electric mobility, comprising:
requesting, by the EVCC, grid code information related to a bidirectional power transfer (BPT) function to an electric vehicle supply equipment (EVSE) that transfers power to the electric mobility;
receiving, by the EVCC, a message including grid code information of a power network to which the EVSE belongs, from the EVSE; and
performing, by the EVCC, a procedure related to the bidirectional power transfer function based on the grid code information of the EVSE.

2. The charging communication method of claim 1, wherein the grid code information includes information of a country, a region, or an authority of the power network to which the EVSE belongs.

3. The charging communication method of claim 1, wherein the message including the grid code information includes information related to a low voltage ride through (LVRT) or high voltage ride through (HVRT) for responding to a process in which a power supply device is coupled to or separated from the power network, defined in the power network, or information related to a reactive power response time.

4. The charging communication method of claim 1, wherein the message including the grid code information includes information of a power, a voltage, or a safety specification of a process in which power is transferred between the electric mobility and the EVSE.

5. The charging communication method of claim 1, wherein the requesting of the grid code information and the receiving of the message including the grid code information are performed as part of, or together with, a process in which the electric mobility and the EVSE exchange function information supported by each other and check compatibility between the electric mobility and the EVSE.

6. The charging communication method of claim 1, wherein the requesting of the grid code information and the receiving of the message including the grid code information are performed as part of, or together with, a process in which the EVCC discovers the EVSE and connects to a communication network to which the EVSE belongs or connects to the EVSE.

7. The charging communication method of claim 1, wherein the requesting of the grid code information and the receiving of the message including the grid code information are performed as part of, or together with, a process in which an initial setup is performed between the EVCC and the EVSE.

8. The charging communication method of claim 1, wherein the requesting of the grid code information and the receiving of the message including the grid code information are performed as part of, or together with, a process in which authorization or services negotiation is performed between the EVCC and the EVSE.

9. The charging communication method of claim 1, wherein the requesting of the grid code information and the receiving of the message including the grid code information are performed as part of, or together with, a process in which parameters are exchanged between the EVCC and the EVSE.

10. The charging communication method of claim 1, wherein the message including the grid code information includes information related to power supply capabilities supported by the EVSE.

11. An electric vehicle communication controller (EVCC) arranged in an electric mobility and associated with a secondary assembly that receives power from a primary assembly, comprising:
a processor configured to execute at least one instruction;
wherein the processor is configured to:
request grid code information related to a bidirectional power transfer (BPT) function to an electric vehicle supply equipment (EVSE) corresponding to the primary assembly;
receive, by the EVCC, a message including grid code information of a power network to which the EVSE belongs, from the EVSE; and
perform, by the EVCC, a procedure related to the bidirectional power transfer function based on the grid code information of the EVSE.

12. The EVCC of claim 11, wherein the grid code information includes information of a country, a region, or an authority of the power network to which the EVSE belongs.

13. The EVCC of claim 11, wherein the message including the grid code information includes information related to a low voltage ride through (LVRT) or high voltage ride through (HVRT) for responding to a process in which a power supply device is coupled to or separated from the power network, defined in the power network, or information related to a reactive power response time.

14. The EVCC of claim 11, wherein the message including the grid code information includes information of a power, a voltage, or a safety specification of a process in which power is transferred between the electric mobility and the EVSE.

15. The EVCC of claim 11, wherein the processor is configured to request the grid code information to the EVSE and receive the message including the grid code information from the EVSE as part of, or together with, a process in which the electric mobility and the EVSE exchange function information supported by each other and check compatibility between the electric mobility and the EVSE.

16. A charging communication method for charging an electric mobility, performed by a supply equipment communication controller (SECC) associated with a primary assembly that transfers power to an electric mobility, comprising:
receiving a message requesting grid code information related to a bidirectional power transfer (BPT) function from the electric mobility;
transmitting a message including grid code information of a power network to which an electric vehicle supply equipment (EVSE) corresponding to the primary assembly belongs, to the electric mobility; and
performing, by the EVSE, a procedure related to the bidirectional power transfer function based on the grid code information.

17. The charging communication method of claim 16, wherein the grid code information includes information of a country, a region, or an authority of the power network to which the EVSE belongs.

18. The charging communication method of claim 16, wherein the message including the grid code information includes information related to a low voltage ride through (LVRT) or high voltage ride through (HVRT) for responding to a process in which a power supply device is coupled to or separated from the power network, defined in the power network, or information related to a reactive power response time.

19. The charging communication method of claim 16, wherein the message including the grid code information includes information of a power, a voltage, or a safety specification of a process in which power is transferred between the electric mobility and the EVSE.

20. The charging communication method of claim 16, wherein the receiving of the message requesting the grid code information from the electric mobility and transmitting of the message including the grid code information to the electric mobility are performed as part of, or together with, a process in which the electric mobility and the EVSE exchange function information supported by each other and check compatibility between the electric mobility and the EVSE.
